# EUROPEAN PATENT APPLICATION

(11) **EP 3 301 291 A1**
(43) Date of publication of application: **04.04.2018**
(21) Application number: 17172871.0
(22) Date of filing: 24.05.2017
(51) Int. Cl.: F02M 31/04, F02B 29/04, B60H 1/32

(54) **THERMAL MANAGEMENT SYSTEM OF THE VEHICLE, VEHICLE AND METHOD FOR OPERATING A THERMAL MANAGEMENT SYSTEM**

(71) Applicant: Continental Automotive GmbH, 30165 Hannover (DE)
(72) Inventor: Fokkelman, Joris, 93105 Tegernheim (DE); Baumgärtner, Christoph, 93128 Regenstauf (DE); Beer, Johannes, 93051 Regensburg (DE); Métayer, Julien, 31500 Toulouse (FR)

(57) **Abstract**

Thermal management system (1) of a vehicle for optionally heating or cooling intake air for a combustion engine of the vehicle depending on a requirement,
the thermal management system (1) comprising
- a heat transfer fluid passed in a circuit (3) for transfer of thermal energy from a first reservoir (5) to a second reservoir (7), wherein the circuit (3) is operable either as a heat pump or a refrigerator depending on the determined requirement;
- at least one first heat exchanger (17) for transfer of thermal energy from the heat transfer fluid to the intake air and
- at least one control unit (23) comprising means for determining a heating or cooling requirement for the intake air and means for controlling the thermal management system (1) by operating the circuit (3) either as a heat pump or a refrigerator depending on the determined requirement.

## Description

The present invention relates to a thermal management system of the vehicle. It further relates to a vehicle comprising a thermal management system and to a method for operating a thermal management system.

The document FR 2 861 811 A1 discloses a thermal management system for a vehicle which allows heating of recirculated exhaust gas for a diesel engine. The thermal management system comprises a heat transfer fluid passed in the circuit for the transfer of heat from a reservoir to the exhaust gas by way of a heat pump.

It has been found, that in certain operating conditions of a vehicle, it might be advantageous to heat intake air for a combustion engine, while in other operating conditions, it is desirable to cool down the intake air. In particular, it might be desirable to heat the intake air in case of a cold start of the engine in order to reduce NOₓ and HC emissions.

It is an object of the present invention, to provide a thermal management system which makes it possible to achieve reduced emissions and efficient operation of a combustion engine under all operating conditions.

This object is achieved by means of the thermal management system according to claim one. Advantageous embodiments and developments are objects of the dependent claims.

According to an aspect of the invention, a thermal management system of a vehicle for optionally heating or cooling intake air for combustion engine of the vehicle depending on a requirement is disclosed. The thermal management system comprises a heat transfer fluid passed in a circuit for transfer of thermal energy from a first reservoir to a second reservoir, wherein the circuit is operable either as a heat pump or a refrigerator depending on the determined requirement. The thermal management system further comprises at least one first heat exchanger for transfer of thermal energy from the heat transfer fluid to the intake air and at least one control unit comprising means for determining a heating or cooling requirement for the intake air and means for controlling the thermal management system by operating the circuit either as a heat pump or a refrigerator depending on the determined requirement.

This thermal management system has the advantage, that it makes it possible to deliver heat to the intake air or to take heat from the intake air according to need. The need may in particular be determined by taking into account the efficiency of the combustion engine and its emissions. In particular, the need for delivering heat to the intake air might be attached to certain operating conditions of the combustion engine, in particular the occurrence of a cold start. Therefore, engine temperature could be a possible criterion to determine the requirement. By optionally heating or cooling the intake air for a combustion engine, emissions e.g. during a cold start can be reduced, particularly emissions of NOₓ and HC, and the combustion engine can be operated efficiently.

According to an embodiment of the invention, the means for controlling the thermal management system comprise a number of valves in the circuit which are switchable to operate a first heat transfer means and a second heat transfer means of the circuit as a condenser or as an evaporator, respectively, depending on the determined requirement.

According to this embodiment, the reversibility of the circuit is implemented by a number of valves which can be switched to operate the circuit either as a heat pump or a refrigerator. The circuit comprises at least one first heat transfer means and one second heat transfer means which are both operable as condenser or as evaporator. To switch the direction of netto heat flow, i.e. to reverse the circuit, the intake and output connections of the two heat transfer means can be switched by means of the valves. In particular, 1-2 way valves can be used.

This has the advantage, that the reversibility of the circuit is achieved by very simple and easy easily controllable means. The valves might be arranged in a valve block.

According to an embodiment, the at least one first heat exchanger is thermally coupled to a coolant water circuit of the vehicle. Thermal energy is transferred to the intake air via the coolant water circuit and at least one second heat exchanger, which is thermally coupled to the coolant water circuit and an intake pipe of the vehicle.

According to this embodiment, thermal energy is not delivered directly from the heat transfer fluid circuit to the intake air, but by interposing a coolant water circuit. This has the advantage that an existing coolant water circuit of the vehicle can remain in place and can be used to deliver thermal energy to the intake air and e.g. to a cabin cooler.

According to an embodiment, the circuit for transfer of thermal energy comprises an electrically driven climate compressor.

According to this embodiment, the heat transfer fluid circuit is that of an air conditioning system of the vehicle. This has the advantage that power can be efficiently delivered to the thermal management system during or even before an engine start, since operation of an electrically driven climate compressor is not dependent on the engine speed. This embodiment is therefore particularly advantageous in the case of a cold start.

The heat transfer fluid used in the circuit can be CO₂ or 1,1,1,2-tetrafluorethan, which are both used in air conditioning systems of vehicles.

According to an aspect of the invention, a vehicle comprising a combustion engine and an intake pipe for sucking in air for the combustion engine is described, the vehicle further comprising the above-described thermal management system.

This vehicle has the advantage of lower emissions, especially lower NOₓ and HC emissions.

According to an aspect of the present invention, a method for operating the described thermal management system is described, the method comprising determining a heating or cooling requirement for the intake air and operating the means for controlling the thermal management system to operate the circuit either as a heat pump or a refrigerator depending on the determined requirement.

The heating or cooling requirement for the intake air may be determined by determining a present or future operating condition of the vehicle. It might also be determined by determining certain parameters of the vehicle, in particular the engine temperature or engine speed.

According to an aspect of the present invention, a computer program product is described comprising a computer readable medium bearing computer program code embodied therein for executing the above described method.

Further advantages, advantageous embodiments and developments for the thermal management system will become apparent from the exemplary embodiments which are described below in association with schematic figures.
- Figure 1: shows a thermal management system according to an embodiment of the invention;
- Figure 2: shows the thermal management system according to figure 1 in a first operation mode and
- Figure 3: shows the thermal management system according to figure 1 in a second operation models.

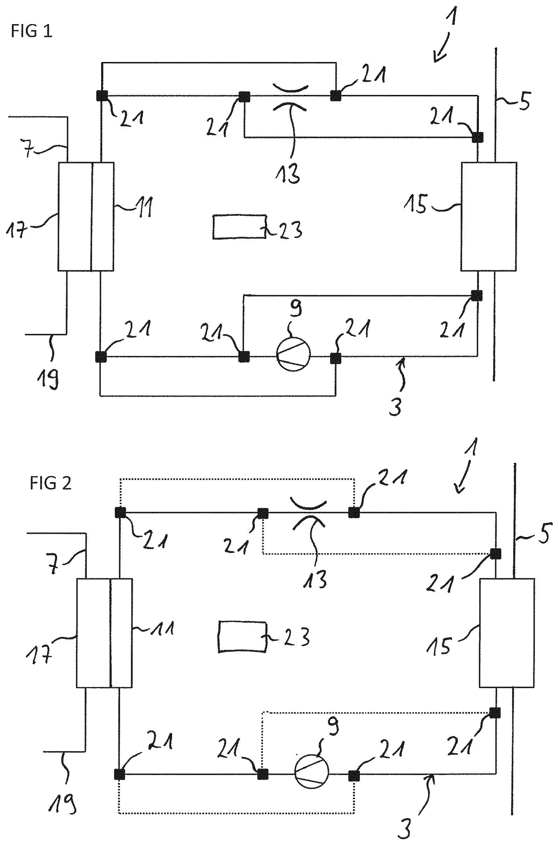

Figure 1 shows a thermal management system 1 for a vehicle with a combustion engine, e.g. a passenger car. The thermal management system 1 comprises a heat transfer fluid passed in a circuit 3 used to transfer thermal energy from the first reservoir 5 to a second reservoir 7. The circuit 3 is reversible, i.e. it is operable either as a heat pump or as a refrigerator. This makes it possible to transfer heat either from the first reservoir 5 to the second reservoir 7 or from the second reservoir 7 to the first reservoir 5.

The first reservoir 5 can in particular be surrounding air. The second reservoir 7 can in particular be intake air for the combustion engine which is passed in an intake pipe 19.

The circuit 3 comprises a compressor 9, a first heat transfer means 11, an expansion valve 13 and a second heat transfer means 15. The first heat transfer means 11 and the second heat transfer means 15 can both be operated either as evaporator or as condenser.

The circuit 3 further comprises a first heat exchanger 17 for the transfer of thermal energy from the circuit 3 to the intake air.

The reversibility of the circuit 3 is implemented by a number of valves 21, particularly 1-2 way valves, and by a control unit 23 for determining a heating or cooling requirement for the intake air and for controlling the valves 21 to operate the circuit 3 either as a heat pump or a refrigerator depending on the determined heating or cooling requirement.

In operation, the heat transfer fluid is passed in the circuit 3 in the form of vapor, is compressed in the compressor 9 at constant entropy and exits the compressor 9 superheated. Depending on the operation mode of the thermal management system 1, i.e. the direction of the heat flow, the superheated vapor then travels either through the first heat transfer means 11 or the second heat transfer means 15, depending on which of the two is used as a condenser in the present operation mode. In the condenser, the superheated vapor gives off heat and is condensed into a liquid by removing additional heat. The liquid heat transfer fluid then passes the expansion valve 13 where it expands and cools. From the expansion valve 13, the heat transfer fluid passes either through the first heat transfer means 11 or the second heat transfer means 15, depending on which one is operated as an evaporator. In the evaporator, the heat transfer fluid is evaporated, thereby taking up heat.

Details of the cycle depend on the choice of heat transfer fluid. Certain modifications have to be made, if e.g. CO₂ is used as a heat transfer fluid. The principal operation of the thermal management system 1, however, remains the same.

Figure 2 shows the thermal management system 1 in a first operation mode, where intake air in the intake pipe 19 is heated. This operation mode is advantageous in the case of a cold start.

In this operation mode, the valves 21 are switched in a way that only the parts of the circuit 3 which are illustrated in figure 2 in solid lines are active. Heat transfer fluid is therefore only passed through part of the circuit 3 depicted in solid lines.

According to this operation mode, the heat transfer fluid is compressed by the compressor 9 and passes as superheated vapor through the first heat transfer means 11, which is operated as a condenser. In the condenser, the heat transfer fluid gives off heat, which is transferred to the intake air by means of the first heat exchanger 17.

The liquidised heat transfer fluid is then passed through the expansion valve 13, where its pressure is abruptly decreased, causing evaporation of at least a part of the heat transfer fluid and cooling of the heat transfer fluid.

The heat transfer fluid then passes through the second heat transfer means 15, which is operated in this operation mode as an evaporator. There, the heat transfer fluid evaporates, taking up heat from the first reservoir 5, e.g. the surrounding air.

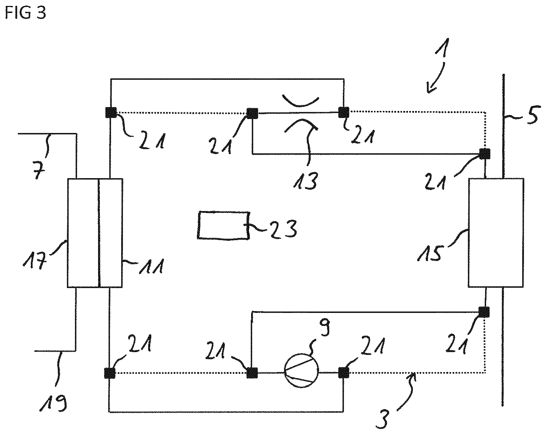

Figure 3 shows the thermal management system 1 according to figure 1 in a second operating mode, in which it is used to cool the intake air passed in the intake pipe 19. This operation mode can be advantageous when the engine temperature is high.

In this operation mode, the valves 21 are switched in a way that only the parts of the circuit 3 which are illustrated in figure 3 in solid lines are active. Heat transfer fluid is therefore only passed through part of the circuit 3 depicted in solid lines.

In this operation mode, heat transfer fluid is compressed by the compressor 9 and passed as superheated vapor through the second heat transfer means 15, which in this mode is operated as a condenser. There, it's gives off heat to the first reservoir 5, e.g. the surrounding air. The heat transfer fluid is liquidised and passed to the expansion valve 13, where its pressure abruptly decreases and the heat transfer fluid cools.

After that, the heat transfer fluid is passed through the first heat transfer means 11, which in this operation mode is operated as an evaporator. In the first heat transfer means 11, the heat transfer fluid is evaporated, thereby taking up thermal energy from the second reservoir 7 by way of the first heat exchanger 17. Thus, intake air passed in the intake pipe 19 is cooled.

In a different embodiment which is not shown in the figures, heat is not transferred to the intake air directly at the first heat exchanger. Instead, the second reservoir is a water coolant cycle of the vehicle. Thus, heat is transferred from the circuit 3 to a water coolant cycle and then by means of a second heat exchanger to the intake air.

### Reference symbols

- 1: thermal management system
- 3: circuit
- 5: first reservoir
- 7: second reservoir
- 9: compressor
- 11: first heat transfer means
- 13: expansion valve
- 15: second heat transfer means
- 17: first heat exchanger
- 19: intake pipe
- 21: valve
- 23: control unit

## Claims

1. Thermal management system (1) of a vehicle for optionally heating or cooling intake air for a combustion engine of the vehicle depending on a requirement,
the thermal management system (1) comprising
- a heat transfer fluid passed in a circuit (3) for transfer of thermal energy from a first reservoir (5) to a second reservoir (7), wherein the circuit (3) is operable either as a heat pump or a refrigerator depending on the determined requirement;
- at least one first heat exchanger (17) for transfer of thermal energy from the heat transfer fluid to the intake air and
- at least one control unit (23) comprising means for determining a heating or cooling requirement for the intake air and means for controlling the thermal management system (1) by operating the circuit (3) either as a heat pump or a refrigerator depending on the determined requirement.

2. Thermal management system (1) according to claim 1,
wherein the means for controlling the thermal management system (1) comprise a number of valves (21) in the circuit (3) which are switchable to operate a first heat transfer means (11) and a second heat transfer means (15) of the circuit (3) as a condenser or as an evaporator, respectively, depending on the determined requirement.

3. Thermal management system (1) according to claim 1 or 2,
wherein the at least one first heat exchanger (17) is thermally coupled to a coolant water circuit of the vehicle for transferring thermal energy via the coolant water circuit and at least one second heat exchanger, which is thermally coupled to the coolant water circuit and an intake pipe of the vehicle, to the intake air.

4. Thermal management system (1) according to any of claims 1 to 3,
wherein the circuit (3) for transfer of thermal energy comprises an electrically driven climate compressor.

5. Thermal management system (1) according to any of claims 1 to 4,
wherein the heat transfer fluid is CO₂ or 1,1,1,2-tetrafluorethan.

6. Vehicle comprising a combustion engine and an intake pipe for sucking in air for the combustion engine, the vehicle further comprising a thermal management system (1) according to any of claims 1 to 5.

7. Method for operating a thermal management system (1) according to any of claims 1 to 5, the method comprising
- determining a heating or cooling requirement for the intake air and
- operating the means for controlling the thermal management system (1) to operate the circuit (3) either as a heat pump or a refrigerator depending on the determined requirement.

8. Computer program product comprising a computer readable medium bearing computer program code embodied therein for executing the method according to claim 7.
